# EUROPÄISCHE PATENTSCHRIFT

(11) **EP 3 489 506 B1**
(45) Veröffentlichungstag und Bekanntmachung des Hinweises auf die Patenterteilung: **30.08.2023**
(21) Anmeldenummer: 18206519.3
(22) Anmeldetag: 15.11.2018
(51) Int. Cl.: F03B 13/06, H02J 15/00

(54) **PUMPSPEICHERWERK UND PUMPSPEICHERVERFAHREN**
PUMP STORAGE STATION AND PUMP STORAGE PROCEDURE
AMÉNAGEMENT HYDRAULIQUE À ACCUMULATION PAR POMPAGE ET PROCÉDÉ D'ACCUMULATION PAR POMPAGE

(30) Priorität: 23.11.2017 DE 102017010933
(43) Veröffentlichungstag der Anmeldung: 29.05.2019
(73) Patentinhaber: Piekorz, Bernhard, 45277 Essen (DE)
(72) Erfinder: Piekorz, Bernhard, 45277 Essen (DE)
(74) Vertreter: Grosse Schumacher Knauer von Hirschhausen

(56) Entgegenhaltungen:
- WO-A1-2015/118527
- WO-A1-2015/159278
- WO-A1-2017/147029
- DE-A1-102010 010 701

## Beschreibung

### Gebiet der Erfindung

Die Erfindung betrifft ein Pumpspeicherwerk gemäß Anspruch 1, ein untertägiges Bergwerk ausgestattet mit einem erfindungsgemäßen Pumpspeicherwerk gemäß Anspruch 6 und ein Pumpspeicherverfahren gemäß Anspruch 7. Hierbei ist das Speichern von Wasser unabhängig von einem (oberirdischen) Becken, von großen Kavernen oder von ausgeschwemmten Salzstöcken möglich.

### Technologischer Hintergrund

Die Speicherung von elektrischer Energie aus Wind-, Solar- und Biokraftwerken wird immer wichtiger, da durch unterschiedliche Arten der Energieerzeugung diese Kraftwerke einen ungleichmäßigen Energiefluss im Stromnetz erzeugen, der nicht so leicht an den Energieverbrauch des Endverbrauchers angepasst werden kann, wie z.B. bei der Energieerzeugung durch konventionelle Braun- oder Steinkohlekraftwerke.

In der Patentschrift DE 10 2006 003 982 wird vorgeschlagen, zwei künstliche Kavernen in einem Salzstock zu schaffen, wobei eine künstliche Kaverne als Oberbecken und die andere künstliche Kaverne als Unterbecken dient. Diese Kavernen müssen in großen Tiefen ausgeschwemmt werden, damit es an der Erdoberfläche nicht zu Verwerfungen kommt. Die Wände der Kavernen können gegen das Lösen von Salz mit einer Auskleidung versehen werden. In der Offenlegungsschrift DE 10 2010 010 701 wird ein Energiespeichersystem vorgeschlagen, in der die Flüssigkeitsspeicher tunnelförmig oder ringförmig ausgebildet sind.

### Darstellung der Erfindung

Die der Erfindung zugrunde liegende Aufgabe besteht darin, dass das Speichern von elektrischer Energie flexibel gestaltet wird und möglichst nah am Verbraucher ist. Somit bleiben die Leitungsverluste möglichst gering. Zudem soll eine möglichst große Anzahl von Menschen mit elektrischer Energie versorgt werden. Diese Aufgabe wird durch ein Pumpspeicherwerk gemäß Anspruch 1, ein untertägiges Bergwerk ausgestattet mit einem erfindungsgemäßen Pumpspeicherwerk gemäß Anspruch 6 und ein Pumpspeicherverfahren gemäß Anspruch 7, gelöst. Vorteilhafte Ausgestaltungen ergeben sich aus den Unteransprüchen.

Die Erfindung betrifft ein Pumpspeicherwerk mit einem oberen Speichersystem im ersten Abstand von einer Referenzfläche oder Oberfläche, in dem ein erstes Speicherringsystem ausgestattet ist, mit einem ersten Speicherring und einem zweiten Speicherring, mit auf dem Umfang des ersten Speicherrings liegenden ersten Fallrohren und mehreren, auf dem Umfang des zweiten Speicherrings liegenden zweiten Fallrohren, sowie mit einem ersten Sammler, mit einem ersten Maschinenhaus, mit einem ersten Verteiler, sowie einem unterhalb des ersten Verteilers im dritten Abstand von der Oberfläche liegenden unterem Speichersystem, in dem ein zweites Speicherringsystem ausgestattet ist, mit einem dritten Speicherring, mit einem vierten Speicherring, mit mehreren auf dem Umfang des dritten Speicherrings liegenden sechsten Fallrohren und mehreren auf dem Umfang des vierten Speicherrings liegenden fünften Fallrohren, sowie mit einem Wasserspeicher, sowie mit einem ersten Pumpenhaus zum Abpumpen des Wassers aus dem zweiten Speicherringsystem und mit einem zweiten Verteiler.

Der erste Sammler und das erste Speicherringsystem, mit den ersten Fallrohren des ersten Speicherrings und mit den zweiten Fallrohren des zweiten Speicherrings, sind verbunden.

Der erste Sammler ist mit dem ersten Maschinenhaus mit einem oder mehreren dritten Fallrohren und über einen Bypass mit dem ersten Verteiler verbunden, wobei eine dritte Rohrleitung vom ersten Sammler zur Oberfläche führt.

Das zweite Speicherringsystem ist mit den sechsten Fallrohren des dritten Speicherrings und mit den fünften Fallrohren des vierten Speicherrings verbunden, sowie das erste Maschinenhaus und eine zur Oberfläche führende zweite Rohrleitung mit dem ersten Verteiler.

Das zweite Speicherringsystem ist verbunden mit ersten Pumpenleitungen des dritten Speicherrings und zweiten Pumpenleitungen des vierten Speicherrings, sowie das erste Pumpenhaus und erste Steigrohre mit dem ersten Wasserspeicher.

Der zweite Verteiler kann über zweite Steigrohre mit dem ersten Pumpenhaus verbunden sein und über dritte Steigrohre mit dem ersten Speicherring und mit dem zweiten Speicherring des erstes Speicherringsystems.

Das obere Speichersystem kann aus einer Anzahl oberer Speicherringsysteme bestehen, mit dem Abstand Yn und mit dem Radius Rn. Das untere Speichersystem kann aus einer Anzahl unterer Speicherringsysteme bestehen, mit dem Abstand Zn und mit dem Radius Rn. Das Pumpspeicherwerk kann für den oberirdischen Betrieb an einem Fachwerk befestigt sein. Alternativ kann ein untertägiges Bergwerk mit dem Pumpspeicherwerk ausgestattet sein, wobei die Oberfläche die Erdoberfläche ist.

Das Speichern von elektrischer Energie flexibel zu gestalten, insbesondere nah am Verbraucher, gelingt außerdem mit einem Pumpspeicherverfahren nach Anspruch 7. Hierbei wird das obere Speichersystem im ersten Abstand von der Referenzfläche oder Oberfläche mit einem Fluid, insbesondere Wasser, beaufschlagt.

Ein untertägiges Pumpspeicherwerk besteht aus einem oberen Speichersystem, dass aus mehreren Speicherringsystemen mit mehreren Speicherringen besteht, aus einem ersten Sammler, aus einem ersten Maschinenhaus, aus einem ersten Verteiler, aus einem unteren Speichersystem, das aus mehreren Speicherringsystemen mit mehreren Speicherringen besteht, aus Rohrleitungen, die von den Speicherringen zur Erdoberfläche führen, aus Fallrohren die, das gespeicherte Wasser vom oberen Speichersystem über das erste Maschinenhaus zu dem unteren Speichersystem führen, aus einem oder mehreren Wasserspeichem, aus einem oder mehreren Pumpenhäusem, aus einem oder mehreren zweiten Verteiler, aus Steigrohren die, das untere Speichersystem mit dem oberen Speichersystem verbinden und aus einem zweiten Maschinenhaus, dass zwischen dem ersten Verteiler und insbesondere dem vierten Speicherringsystem liegt. Es ist Untertage vorgesehen, dass ein oberes und unteres Speichersystem jeweils mit einem oder mehreren Speicherringsystemen und diese jeweils aus einem oder erfindungsgemäß aus mehreren, vorzugsweise voneinander unabhängigen Speicherringen besteht, die vorzugsweise mehrere km im Radius sind. Die Vorteile von Speicherringen sind genau definierte Wassermengen, keine großen punktuellen Hohlräume wie bei Salzkavemen, keine Oberflächenversiegelung, sowie keine witterungsbedingten Abhängigkeiten der Wassermengen des obertägigen Ober- und Unterbeckens. Die Speicherringe sind mit einem wasserdichten Material ausgekleidet und mit Wasser gefüllt. Die Speicherringe des Speicherringsystems sind über Rohrleitungen mit der Erdoberfläche verbunden und dabei insbesondere an Turbinen angeschlossen. Das erste Speicherringsystem hat abhängig von den geologischen Verhältnissen einen Abstand Y1 zur Erdoberfläche, um Absenkungen des Gesteins an der Erdoberfläche zu vermeiden. Dieses Pumpspeicherwerk kann an jedem Ort betrieben werden. Bedingt durch die Größe der Speicherringe, werden diese mit einem oder erfindungsgemäß mit mehreren Fallrohren ausgestattet, die auf dem Umfang der Speicherringe verteilt sind. Vom ersten Speicherring führen die ersten Fallrohre zum ersten Sammler und sind mit Absperreinrichtungen am ersten Speicherring und am ersten Sammler ausgestattet. Der erste Sammler ist an der Unterseite mit einem oder mehreren dritten Fallrohren ausgestattet. An der Oberseite des ersten Sammlers wird eine dritte Rohrleitung mit der Erdoberfläche verbunden und ist dabei an eine Turbine angeschlossen. Zur Umgehung des ersten Maschinenhauses ist der erste Sammler über einen Bypass mit dem ersten Verteiler verbunden. Bei geöffneten Absperreinrichtungen der ersten Fallrohre und bei geschlossenen Absperreinrichtungen der zweiten Fallrohre, sowie bei geschlossenen Absperreinrichtungen des dritten Fallrohres am ersten Sammler wird, wie in einer kommunizierenden Röhre, der Wasserpegel W1 in der dritten Rohrleitung den gleichen Wasserpegel haben wie in dem ersten Speicherring, um beim Anfahren der Turbinen im Maschinenhaus den erforderlichen Druck zu erreichen.

Nach dem Öffnen der Absperreinrichtungen am dritten Fallrohr durchströmt das Wasser die Turbinen und fällt in den ersten Verteiler, in dem ein permanenter dritter Wasserpegel W3 steht, um die Öffnungen der fünften Fallrohre, sowie der sechsten Fallrohre zu dem unteren Speichersystems zu bedecken. Der erste Verteiler ist durch eine vierte Rohrleitung mit der Erdoberfläche verbunden.

Nach dem Wassereintritt in den ersten Verteiler werden die Absperreinrichtungen der fünften Fallrohre geöffnet und das Wasser kann gleichmäßig in den dritten Speicherring fließen, der unterhalb des ersten Verteilers liegt. Beim Befüllen des dritten Speicherrings mit Wasser, wird die Luft über die fünfte Rohrleitung, die mit der Erdoberfläche verbunden ist, aus dem dritten Speicherring verdrängt und ist dabei insbesondere an Turbinen angeschlossen. Zum Entleeren des dritten Speicherrings wird die erste Pumpenleitung geöffnet und das Wasser des dritten Speicherrings wird, wie in einer kommunizierenden Röhre, in den ersten Wasserspeicher gedrückt. Über das erste Pumpenhaus wird das Wasser durch die Steigrohre zu dem zweiten Verteiler und von dort in die einzelnen Speicherringe des oberen Speichersystems gedrückt. Dabei wird die Luft aus den Speicherringen herausgedrückt und zur Erdoberfläche, insbesondere zu einer Turbine gefördert. Das beim Aufschließen des untertägigen Pumpspeicherwerks anfallende Grundwasser wird in einem temporären Oberbecken zwischen gespeichert und anschließend zum Betrieb des untertägigen Pumpspeicherwerks wiederverwendet. Durch die große Anzahl an Speicherringsystemen mit den Speicherringen im oberen und unteren Speichersystem besteht die Möglichkeit für das Energieuntemehmen eine gute Auslastung des Pumpspeicherwerks zu erreichen und durch die große Anpassungsfähigkeit des Systems preisgünstig Strom zum Befüllen des oberen Speichersystems einzukaufen.

### Kurzbeschreibung der Figuren

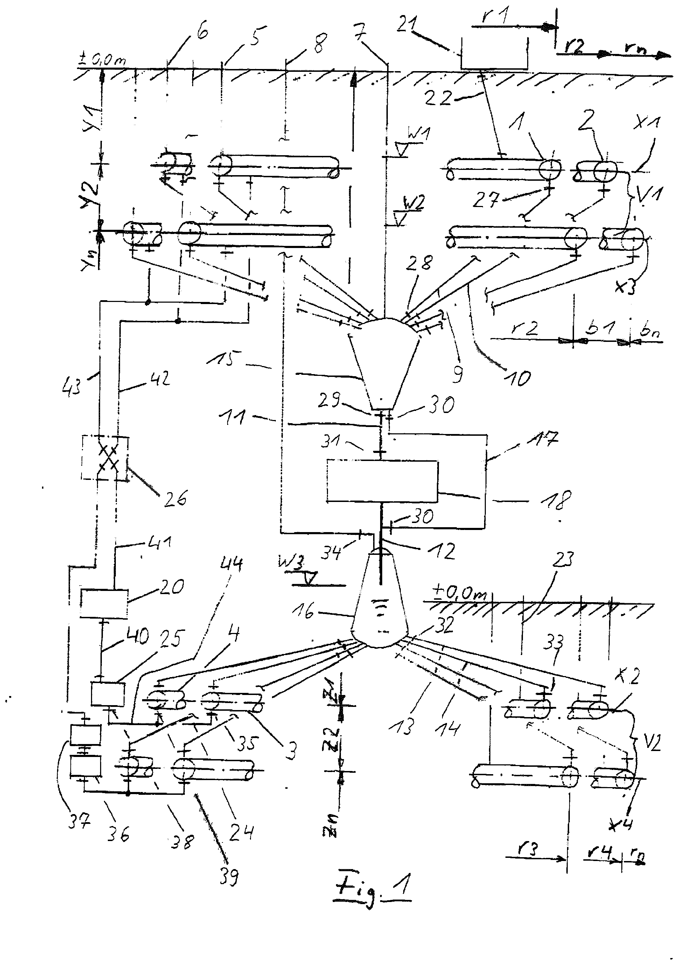

In der Zeichnung zeigt
- Fig. 1.: eine schematische Darstellung des Pumpspeicherwerks.

### Detaillierte Beschreibung von Ausführungsbeispielen

Das beim Aufschließen des untertägigen Pumpspeicherwerks anfallende Grundwasser wird in einem temporären Oberbecken (21) zwischen gespeichert und anschließend zum Betrieb des untertägigen Pumpspeicherwerks wiederverwendet. Nach Inbetriebnahme des Pumpspeicherwerks wird das temporäre Oberbecken (21) abgebaut. Das obere Speichersystem (V1) hat abhängig von den geologischen Verhältnissen einen ersten Abstand (Y1) zur Erdoberfläche, um Bergschäden zu vermeiden. Das obere Speichersystem (V1) besteht gemäß Fig. 1 aus einem ersten Speicherringsystem (X1) mit einem ersten Speicherring (1), mit dem ersten Radius (r1), sowie mehreren ersten Fallrohren (9) die gleichmäßig auf dem Umfang verteilt sind und einem zweiten Speicherring (2), mit dem zweiten Radius (r2), sowie mehreren zweiten Fallrohren (10), die gleichmäßig auf dem Umfang verteilt sind und aus einem dritten Speicherringsystem (X3) mit einem zweiten Abstand (Y2) zu dem ersten Speicherringsystem (X1).

Beim Öffnen, des mit Wasser gefüllten oberen Speichersystem (V1) mit dem ersten Speicherringsystem (X1) strömt das Wasser bei geöffneten ersten Absperreinrichtungen (27) und bei geöffneten zweiten Absperreinrichtungen (28), aus dem ersten Speicherring (1) durch die ersten Fallrohre (9) in den ersten Sammler (15) und füllt diesen bei geschlossener dritter Absperreinrichtung (29), wobei der erste Wasserpegel (W1) so weit in die dritte Rohrleitung (7) steigt, wie in einer kommunizierende Röhre, bis er auch die Höhe erreicht, wie der erste Wasserpegel (W1) im ersten Speicherring (1).

Zur Umgehung des ersten Maschinenhauses (18) ist der erste Sammler (15) über einen Bypass (17) mit dem ersten Verteiler (16) verbunden. Nach dem Öffnen der dritten Absperreinrichtung (29) und der fünften Absperreinrichtung (31), strömt das Wasser durch das dritte Fallrohr (11) und treibt die Turbinen mit den Generatoren im ersten Maschinenhaus (18) an und fällt durch das vierte Fallrohr (12) in den ersten Verteiler (16). Der erste Verteiler (16) ist über eine vierte Rohrleitung (8) bei geöffneter achter Absperreinrichtung (34) mit der Erdoberfläche verbunden. Beim Ablaufen des Wassers aus dem ersten Speicherring (1), zu dem ersten Maschinenhaus (18), strömt die Luft durch die erste Rohrleitung (5) von der Erdoberfläche in den ersten Speicherring (1) und kann insbesondere eine auf der Erdoberfläche angeschlossene Turbine betreiben.

Das untere Speichersystem (V2) hat einen dritten Abstand (Z1) zur Erdoberfläche der unterhalb des ersten Verteilers (16) liegt. Das untere Speichersystem (V2) bestehend aus, einem zweiten Speicherringsystem (X2) mit einem dritten Speicherring (3) und einem dritten Radius (r3), sowie mehreren fünften Fallrohren (13), die gleichmäßig auf dem Umfang des Speicherrings verteilt sind und einem vierten Speicherring (4), mit dem vierten Radius (r4), sowie mehreren sechsten Fallrohren (14), die gleichmäßig auf dem Umfang der Speicherrings verteilt sind und aus einem vierten Speicherringsystem (X4), mit einem vierten Abstand (Z2) zu dem ersten Speicherringsystem (X2). In dem ersten Verteiler (16) steht ein permanenter dritter Wasserpegel (W3), um die Öffnungen der fünften Fallrohre (13), sowie der sechsten Fallrohre (14) zu dem unteren Speichersystem (V2) zu bedecken, damit bei dem starken Wassereintritt aus dem vierten Fallrohr (12) kein Schaden am ersten Verteiler (16) entstehen kann. In dem Moment des Wassereinritts in den ersten Verteiler (16) über das vierte Fallrohr (12) werden die sechsten Absperreinrichtungen (32) und die siebten Absperreinrichtungen (33) geöffnet und das Wasser strömt gleichmäßig durch die fünften Fallrohre (13) in das dritte Speicherringsystem (X2) und füllt den dritten Speicherring (3). Während des Befüllens des dritten Speicherringes (3) mit Wasser, wird die Luft aus dem dritten Speicherring (3) über eine fünfte Rohrleitung (23) zur Erdoberfläche gedrückt und betreibt insbesondere eine auf der Erdoberfläche stehende Turbine. Zum Pumpen des Wassers aus dem dritten Speicherringsystem (X2) in das erste Speicherringsystem (X1), wird die neunte Absperrung (35) und die elfte Absperrung (39) geöffnet. Das Wasser strömt durch die erste Pumpenleitung (24) und durch die zweite Pumpenleitung (44). Bei geöffneter zehnter Absperrung (38) füllt das Wasser den ersten Wasserspeicher (25) und verhält sich wie in einer kommunizierende Röhre. Der erste Wasserspeicher (25) liegt auf der gleichen Höhe wie das zweite Speicherringsystem (X2). Das Wasser aus dem ersten Wasserspeicher (25) wird über das erste Pumpenhaus (20) und durch das erste Steigrohr (40), sowie durch das zweite Steigrohr (41) zu dem zweiten Verteiler (26) transportiert. Vom zweiten Verteiler (26) wird das Wasser über das dritte Steigrohr (42) und das vierte Steigrohr (43) zu dem ersten Speicherringsystem (X1) transportiert. Durch die Wasserentnahme aus dem dritten Speicherring (3) strömt die Luft über die fünfte Rohrleitung (23) von der Erdoberfläche zum dritten Speicherring (3) und betreibt insbesondere an der Erdoberfläche eine Turbine. Das Volumen des unteren Speichersystems (V2) muss gleich oder größer sein als das Volumen des oberen Speichersystems (V1).

Das Pumpspeicherwerk kann oberirdisch aufgestellt sein, wo es etwa an einem Fachwerk (F1) befestigt sein kann.

### Bezugszeichenliste

- 1: erster Speicherring
- 2: zweiter Speicherring
- 3: dritter Speicherring
- 4: vierter Speicherring
- 5: erste Rohrleitung
- 6: zweite Rohrleitung
- 7: dritte Rohrleitung
- 8: vierte Rohrleitung
- 9: erstes Fallrohr
- 10: zweites Fallrohr
- 11: drittes Fallrohr
- 12: viertes Fallrohr
- 13: fünftes Fallrohr
- 14: sechstes Fallrohr
- 15: erster Sammler
- 16: erster Verteiler
- 17: Bypass
- 18: erstes Maschinenhaus
- 19: zweites Maschinenhaus
- 20: erstes Pumpenhaus
- 21: temporäres Oberbecken
- 22: siebtes Fallrohr
- 23: fünfte Rohrleitung
- 24: erste Pumpenleitung
- 25: erster Wasserspeicher
- 26: zweiter Verteiler
- 27: erste Absperreinrichtung
- 28: zweite Absperreinrichtung
- 29: dritte Absperreinrichtung
- 30: vierte Absperreinrichtung
- 31: fünfte Absperreinrichtung
- 32: sechste Absperreinrichtung
- 33: siebte Absperreinrichtung
- 34: achte Absperreinrichtung
- 35: neunte Absperreinrichtung
- 36: zweiter Wasserspeicher
- 37: zweites Pumpenhaus
- 38: zehnte Absperreinrichtungen
- 39: elfte Absperreinrichtungen
- 40: erstes Steigrohr
- 41: zweites Steigrohr
- 42: drittes Steigrohr
- 43: viertes Steigrohr
- 44: zweite Pumpenleitung

- V1: oberes Speichersystem
- V2: unteres Speichersystem
- W1: erster Wasserpegel
- W2: zweiter Wasserpegel
- W3: dritter Wasserpegel
- X1: erstes Speicherringsystem
- X2: zweites Speicherringsystem
- X3: drittes Speicherringsystem
- X4: viertes Speicherringsystem
- An1: Anzahl obere Speicherringsysteme
- An2: Anzahl untere Speicherringsysteme
- Y1: erster Abstand
- Y2: zweiter Abstand
- Yn: Abstand (obere Speicherringsysteme )
- Z1: dritter Abstand
- Z2: vierter Abstand
- Zn: Abstand (untere Speicherringsysteme)
- r1: erster Radius
- r2: zweiter Radius
- r3: dritter Radius
- r4: vierter Radius
- Rn: Radius
- F1: Fachwerk

## Patentansprüche

1. Pumpspeicherwerk mit
einem oberen Speichersystem (V1) im ersten Abstand (Y1) von einer Oberfläche,
einem ersten Maschinenhaus (18),
einem ersten Pumpenhaus (20),
einem im dritten Abstand (Z1) von der Oberfläche liegenden unteren Speichersystem (V2), wobei das obere Speichersystem (V1) ausgestattet ist mit einem ersten Speicherringsystem (X1) mit
einem ersten Speicherring (1),
einem zweiten Speicherring (2),
mehreren, auf dem Umfang des ersten Speicherrings (1) liegenden ersten Fallrohren (9), und
mehreren, auf dem Umfang des zweiten Speicherrings (2) liegenden zweiten Fallrohren (10), und
das untere Speichersystem (V2) ausgestattet ist mit einem zweiten Speicherringsystem (X2) mit
einem dritten Speicherring (3),
einem vierten Speicherring (4),
mit mehreren auf dem Umfang des dritten Speicherrings (3) liegenden sechsten Fallrohren (14) und mehreren auf dem Umfang des vierten Speicherrings (4) liegenden fünften Fallrohren (13),
wobei das erste Pumpenhaus (20) zum Abpumpen von Wasser aus dem zweiten Speicherringsystem (X2) eingerichtet ist,
**gekennzeichnet durch**
einen ersten Sammler (15),
einen ersten Verteiler (16),
einen Wasserspeicher (25), und
einen zweiten Verteiler (26),
wobei das untere Speichersystem (V2) unterhalb des ersten Verteilers (16) liegt,
wobei der erste Sammler (15) und das erste Speicherringsystem (X1), mit den ersten Fallrohren (9) des ersten Speicherrings (1) und mit den zweiten Fallrohren (10) des zweiten Speicherrings (2), verbunden sind,
wobei der erste Sammler (15) mit dem ersten Maschinenhaus (18) mit einem oder mehreren dritten Fallrohren (11) und über einen Bypass (17) mit dem ersten Verteiler (16) verbunden ist, wobei eine dritte Rohrleitung (7) vom ersten Sammler (15) zur Oberfläche führt,
wobei das zweite Speicherringsystem (X2), mit den sechsten Fallrohren (14) des dritten Speicherrings (3) und mit den fünften Fallrohren (13) des vierten Speicherrings (4), sowie das erste Maschinenhaus (18) und eine zur Oberfläche führende zweite Rohrleitung (8) mit dem ersten Verteiler (16) verbunden sind, und
wobei das zweite Speicherringsystem (X2), mit erster Pumpenleitungen (24) des dritten Speicherrings (3) und zweiten Pumpenleitungen (44) des vierten Speicherrings (4), sowie das erste Pumpenhaus (20) und erste Steigrohre (40) mit dem ersten Wasserspeicher (25) verbunden sind.

2. Pumpspeicherwerk nach Anspruch 1, **dadurch gekennzeichnet, dass** der zweite Verteiler (26) über zweite Steigrohre (41) mit dem ersten Pumpenhaus (20) und über dritte Steigrohre (42) mit dem ersten Speicherring (1) und mit dem zweiten Speicherring (2) des erstes Speicherringsystems (X1) verbunden ist.

3. Pumpspeicherwerk nach Anspruch 1 oder 2, **dadurch gekennzeichnet, dass** das obere Speichersystem (V1) aus einer Anzahl oberer Speicherringsysteme (An1), mit dem Abstand (Yn) und mit dem Radius (Rn) besteht.

4. Pumpspeicherwerk nach einem der Ansprüche 1 bis 3, **dadurch gekennzeichnet, dass** das untere Speichersystem (V2) aus einer Anzahl unterer Speicherringsysteme (An2), mit dem Abstand (Zn) und mit dem Radius (Rn) besteht.

5. Pumpspeicherwerk nach einem der Ansprüche 1 bis 4, **dadurch gekennzeichnet, dass** das Pumpspeicherwerk für den oberirdischen Betrieb an einem Fachwerk (F1) befestigt ist.

6. Untertägiges Bergwerk ausgestattet mit einem Pumpspeicherwerk nach einem der Ansprüche 1-4, wobei die Oberfläche die Erdoberfläche ist.

7. Pumpspeicherverfahren für ein Pumpspeicherwerk nach einem der Ansprüche 1-4, bei dem das obere Speichersystem im ersten Abstand von der Oberfläche mit einem Fluid, insbesondere Wasser, beaufschlagt wird.

## Claims

1. Pump storage station having an upper storage system (V1) at a first distance (Y1) from a surface,
a first power house (18),
a first pump house (20),
a lower storage system (V2) located at a third distance (Z1) from the surface, wherein the upper storage system (V1) is equipped with a first storage ring system (X1) with
a first storage ring (1),
a second storage ring (2),
a plurality of first downpipes (9) located on the circumference of the first storage ring (1), and
a plurality of second downpipes (10) located on the circumference of the second storage ring (2), and
the lower storage system (V2) is equipped with a second storage ring system (X2) with
a third storage ring (3),
a fourth storage ring (4),
with a plurality of sixth downpipes (14) located on the circumference of the third storage ring (3) and a plurality of fifth downpipes (13) located on the circumference of the fourth storage ring (4),
wherein the first pump house (20) is designed for pumping water out of the second storage ring system (X2),
**characterized by**
a first collector (15),
a first manifold (16),
a water storage tank (25), and
a second manifold (26),
wherein the lower storage system (V2) is located below the first manifold (16),
wherein the first collector (15) and the first storage ring system (X1) are connected to the first downpipes (9) of the first storage ring (1) and to the second downpipes (10) of the second storage ring (2),
wherein the first collector (15) is connected to the first power house (18) with one or more third downpipes (11) and via a bypass (17) to the first manifold (16), wherein a third pipeline (7) leads from the first collector (15) to the surface,
wherein the second storage ring system (X2) is connected to the sixth downpipes (14) of the third storage ring (3) and to the fifth downpipes (13) of the fourth storage ring (4), and the first power house (18) and a second pipeline (8) leading to the surface are connected to the first manifold (16), and
wherein the second storage ring system (X2) is connected to first pump lines (24) of the third storage ring (3) and second pump second pump lines (44) of the fourth storage ring (4), and the first pump house (20) and first riser pipes (40) are connected to the first water storage tank (25).

2. Pump storage station according to Claim 1, **characterized in that** the second manifold (26) is connected to the first pump house (20) via second riser pipes (41) and to the first storage ring (1) and to the second storage ring (2) of the first storage ring system (X1) via third riser pipes (42).

3. Pump storage station according to Claim 1 or 2, **characterized in that** the upper storage system (V1) consists of a number of upper storage ring systems (An1) with the distance (Yn) and with the radius (Rn).

4. Pump storage station according to one of Claims 1 to 3, **characterized in that** the lower storage system (V2) consists of a number of lower storage ring systems (An2), with the distance (Zn) and with the radius (Rn) .

5. Pump storage station according to one of Claims 1 to 4, **characterized in that** the pump storage station is attached to a framework (F1) for aboveground operation.

6. Underground mine equipped with a pump storage station according to one of Claims 1-4, wherein the surface is the surface of the earth.

7. Pump storage procedure for a pump storage station according to one of Claims 1-4, in which the upper storage system is pressurized with a fluid, in particular water, at a first distance from the surface.

## Revendications

1. Aménagement hydraulique à accumulation par pompage, comprenant un système à accumulation supérieur (V1) à une première distance (Y1) d'une surface,
un premier carter de machine (18),
un premier carter de pompe (20),
un système à accumulation inférieur (V2) reposant à une troisième distance (Z1) de la surface, dans lequel le système à accumulation supérieur (V1) est équipé d'un premier système d'anneaux à accumulation (X1) avec
un premier anneau à accumulation (1),
un deuxième anneau à accumulation (2),
une pluralité de premiers tubes de descente (9) reposant sur le pourtour du premier anneau à accumulation (1), et
plusieurs deuxièmes tubes de descente (10) reposant sur le pourtour du deuxième anneau à accumulation (2), et
le système à accumulation inférieur (V2) est équipé d'un deuxième système d'anneaux à accumulation (X2) avec
un troisième anneau à accumulation (3),
un quatrième anneau à accumulation (4),
comprenant plusieurs sixièmes tubes de descente (14) reposant sur le pourtour du troisième anneau à accumulation (3) et plusieurs cinquièmes tubes de descente (13) reposant sur le pourtour du quatrième anneau à accumulation (4),
dans lequel le premier carter de pompe (20) est conçu pour pomper de l'eau du deuxième système d'anneaux à accumulation (X2),
**caractérisé par**
un premier collecteur (15),
un premier distributeur (16),
un accumulateur d'eau (25), et
un deuxième distributeur (26),
dans lequel le système à accumulation inférieur (V2) repose en-dessous du premier distributeur (16),
dans lequel le premier collecteur (15) et le premier système d'anneaux à accumulation (X1) sont reliés aux premiers tubes de descente (9) du premier anneau à accumulation (1) et aux deuxièmes tubes de chute (10) du deuxième anneau à accumulation (2),
dans lequel le premier collecteur (15) est relié au premier carter de machine (18) par un ou plusieurs troisièmes tubes de descente (11) et au premier distributeur (16) par une dérivation (17), dans lequel une troisième conduite (7) va du premier collecteur (15) à la surface,
dans lequel le deuxième système d'anneaux à accumulation (X2) est relié aux sixièmes tubes de descente (14) du troisième anneau à accumulation (3) et aux cinquièmes tubes de descente (13) du quatrième anneau à accumulation (4), ainsi que le premier carter de machine (18) et une deuxième conduite (8) allant vers la surface sont reliés au premier distributeur (16), et
dans lequel le deuxième système d'anneaux à accumulation (X2) est relié à des premières lignes de pompage (24) du troisième anneau à accumulation (3) et à des deuxièmes lignes de pompage (44) du quatrième anneau à accumulation (4), ainsi que le premier carter de pompe (20) et des premiers tuyaux montants (40) sont reliés au premier accumulateur d'eau (25).

2. Aménagement hydraulique à accumulation par pompage selon la revendication 1, **caractérisé en ce que** le deuxième distributeur (26) est relié au premier carter de pompe (20) par des deuxièmes tuyaux montants (41) et au premier anneau à accumulation (1) et au deuxième anneau à accumulation (2) du premier système d'anneaux à accumulation (X1) par des troisièmes tuyaux montants (42) .

3. Aménagement hydraulique à accumulation par pompage selon la revendication 1 ou 2, **caractérisé en ce que** le système à accumulation supérieur (V1) est composé d'un nombre de systèmes d'anneaux à accumulation supérieurs (An1), avec l'écart (Yn) et avec le rayon (Rn).

4. Aménagement hydraulique à accumulation par pompage selon l'une des revendications 1 à 3, **caractérisé en ce que** le système à accumulation inférieur (V2) est composé d'un nombre de systèmes d'anneaux à accumulation inférieurs (An2), avec l'écart (Zn) et avec le rayon (Rn) .

5. Aménagement hydraulique à accumulation par pompage selon l'une des revendications 1 à 4, **caractérisé en ce que** l'aménagement à accumulation par pompage est fixé sur un treillis (F1) pour le fonctionnement aérien.

6. Mine en sous-sol équipée d'un aménagement hydraulique à accumulation par pompage selon l'une des revendications 1 - 4, dans lequel la surface est la surface de la terre.

7. Procédé d'accumulation par pompage pour un aménagement à accumulation par pompage selon l'une des revendications 1 - 4, dans lequel le système à accumulation supérieur est alimenté par un fluide, en particulier de l'eau, dans la première distance de la surface.
